(19) Europäisches Patentamt
European Patent Office
Office européen des brevets

(11) **EP 4 404 075 A1**

(12) **EUROPEAN PATENT APPLICATION**

(43) Date of publication:
**24.07.2024 Bulletin 2024/30**

(21) Application number: **23199119.1**

(22) Date of filing: **22.09.2023**

(51) International Patent Classification (IPC):
**G06F 16/215** (2019.01)     **G06F 16/23** (2019.01)
**G06F 16/28** (2019.01)

(52) Cooperative Patent Classification (CPC):
**G06F 16/215; G06F 16/2365; G06F 16/287**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.01.2023 US 202318098467**

(71) Applicant: **Google LLC
Mountain View, CA 94043 (US)**

(72) Inventors:
 • LIU, Michael Yang
   Mountain View, CA 94043 (US)
 • BELAPURKAR, Abhijit
   560037 Bangalore (IN)
 • VERMA, Abhishek
   Mountain View, CA 94043 (US)
 • UPPALAGUPTAM, Bhaswanth
   80335 Munich (DE)
 • CHOU, Edward
   Mountain View, CA 94043 (US)
 • JUN, Michael
   Mountain View, CA 94043 (US)
 • MADABHUSHI, Pramod
   Mountain View, CA 94043 (US)
 • MAHER, Richard A.
   Mountain View, CA 94043 (US)
 • MICHAYLOV, Spiro
   Mountain View, CA 94043 (US)
 • KONERU, Srirama
   Mountain View, CA 94043 (US)
 • PIZARRO, Nicole
   Mountain View, CA 94043 (US)

(74) Representative: **Betten & Resch
Patent- und Rechtsanwälte PartGmbB
Maximiliansplatz 14
80333 München (DE)**

(54) **AUTOMATED, IN-CONTEXT DATA QUALITY ANNOTATIONS FOR DATA ANALYTICS VISUALIZATION**

(57)    A mechanism that flags and detects inaccurate or bad data, and annotates the flagged data with automatically generated metadata that may then be provided to end users (*e.g.*, resource managers, service owners, finance analysts, data scientists, executives, etc.) via an application stack. The automatic annotations comprise quality annotations that may include data freshness, correctness, and/or completeness.

200
FIG. 2

EP 4 404 075 A1

**Description**

BACKGROUND

Data analytics is an important process used in supporting a variety of business operations including business intelligence (BI). Data quality is typically an important factor in any BI suite. Data quality may be impacted by different data characteristics. For example, missing data or data spikes may impact data accuracy. Further, a data set may be incorrect because of user input or machine generated errors. A data set may also be inconsistent because the data is not expressed in the same way (*e.g.,* "day-to-day" versus "daily"). The format of the data may also impact its usefulness (*e.g.,* format of machine generated data may not be as useful for analysis). These characteristics may, in turn, impact user confidence and, in general, business analysis. When users question the overall quality of data, *e.g.,* across freshness (how new is the data), data completeness (is the data all the data), and correctness (does it accurately represent events), user satisfaction is adversely impacted.

Some standalone products, dashboards, and databases operate to quantify the quality of underlying data, but it is challenging to associate metadata with the data in a standalone form. Additionally, manual methods of generating data annotations are not scalable where large datasets are involved.

SUMMARY

An aspect of the disclosed technology may comprise a data analytics method. The method may comprise cleansing a stream of input data to produce clean data, generating quality annotations from the clean data, the quality annotations comprising parameters associated with correctness, completeness, and freshness, collecting the quality annotations, generating a quality score based on the collected quality annotations, and identifying problematic data associated with the input data based on the quality score.

In accordance with this aspect of the disclosed technology, the step of identifying may comprise identifying one or more time slices of data associated with a dimension.

In accordance with this aspect of the disclosed technology, the step of generating quality annotations may comprise generating a correctness metric using eqn. (1).

In accordance with this aspect of the disclosed technology, the step of generating quality annotations may comprise generating a completeness metric using eqn. (2).

In accordance with this aspect of the disclosed technology, the step of generating quality annotations may comprise generating a freshness metric using eqn. (3).

In accordance with this aspect of the disclosed technology, the method may comprise transforming the clean data into business data. In addition, identifying may comprise identifying one or more slices of data associated with a dimension and outputting the one or more slices of data and the quality score to a user interface. Further, outputting may comprise outputting one or more of the collected quality annotations to the user interface.

An aspect of the disclosed technology may comprise a system. The system may comprise a first computing device that cleanses a stream of input data to produce clean data and a first set of quality annotations; a second computing device that generates a second set of quality annotations from the clean data, the quality annotations comprising parameters associated with correctness, completeness, and freshness; and a third computing device coupled to the first computing device and second computing device, the third computing device configured to: collect the first and second set of quality annotations, generate a quality score based on the collected quality annotations, and identify problematic data associated with the input data based on the quality score.

In accordance with this aspect of the disclosed technology, the third computing device may identify problematic data by identifying one or more time slices of data associated with a dimension.

In accordance with this aspect of the disclosed technology, the second computing device may generate quality annotations by generating a correctness metric using eqn. (1).

In accordance with this aspect of the disclosed technology, the second computing device may generate quality annotations by generating a completeness metric using eqn. (2).

In accordance with this aspect of the disclosed technology, the second computing device may generate quality annotations by generating a freshness metric using eqn. (3).

In accordance with this aspect of the disclosed technology, the second computing device may transform the clean data into business data. In addition, the third computing device may identify problematic data by identifying one or more slices of data associated with a dimension and outputting the one or more slices of data and the quality score to a user interface. Further, outputting may comprise outputting one or more of the collected quality annotations to the user interface.

BRIEF DESCRIPTION OF THE DRAWINGS

FIG. 1 illustrates a process in accordance with one or more aspects of the disclosed technology.
FIG. 2 illustrates a system architecture and data flow in accordance with one or more aspects of the disclosed technology.
FIG. 3 illustrates annotation objections in accordance with one or more aspects of the disclosed technology.
FIG. 4 illustrates a sample graphic output to a user interface in accordance with one or more aspects of the disclosed technology.
FIG. 5 illustrates a processing device in accordance with one or more aspects of the disclosed technology.

DETAILED DESCRIPTION

## Overview

An aspect of the disclosed technology is a mechanism that flags and detects inaccurate, problematic, or bad data, annotates the data with automatically-generated metadata that may then be provided to end users (*e.g.,* resource managers, service owners, finance analysts, data scientists, executives, etc.) via an application stack. The automatic annotations comprise quality annotations that are based on data freshness, correctness, and/or completeness metrics.

The mechanism may be deployed, for example, as part of a data warehouse system that periodically collects data across a fleet of servers distributed across the globe (*e.g.,* datacenters, servers, virtual resources used for computing, storage, and networking). The collected data may include resource usage, available capacity, committed capacity, outages, etc. Data quality is an important concern because machine data aggregated across the globe drives capacity planning, machines orders and builds, content delivery, and operational processes like distribution of virtual capacity to end users and/or service owners who run jobs in datacenters. The mechanism, when applied in this context, provides end users and/or service owners the capability to receive quality annotations that provide appropriate context alongside the data being reported.

For instance, the mechanism may comprise automatically producing data quality annotations using cleansers and pipelines and using annotation sweepers to collect the annotations. Data quality metrics are then computed using the collected annotations.

The mechanism may be embodied in a system having one or more cleansers. The cleansers operate to provide an anomaly detection framework. The cleansers receive input data and output clean data to a data mart and quality annotations to a data quality data mart. The data mart transforms the data and outputs its own quality annotations to the data quality data mart, as well as output business data to an application stack.

The data quality data mart collects quality issues and outputs one or more quality scores to an organization element that organizes annotations by identifying time slices of dimensions (*e.g.,* different data types) that may be problematic. In general, the data quality data mart data generates quality memos, *e.g.,* a summary of data quality annotations for one or more data marts (collected through one or more data quality memo sweepers). The data quality data mart may hold the data quality metrics (*e.g.,* completeness, correctness, etc.) to measure the quality of a data mart. It may also drive a data quality status dashboard.

An organization element outputs quality scores for associated dimensions to the application stack. The application stack processes the business data and scores per dimensions, it receives and provides data via a UI with in-context data quality annotations.

As indicated above, data quality metrics may comprise one or more of correctness, completeness, and freshness. Correctness may be measured by: (1) invariants imposed on the data through transformations; (2) consistency, *e.g.,* relationship to other data marts, sources, metrics; and (3) variability, *e.g.,* measurements associated with backfills. Completeness may be measured by: (1) data coverage, based on key dimensions (*e.g.,* location) of the data mart; and (2) data variability, *e.g.,* day over day changes to the number of records should be within reason or a predetermined number. Freshness may be measured by: (1) first time to publication with a predetermined percentage of completeness level; and (2) statistical analysis of historical variability.

In some examples, correctness may be determined using eqn. (1) as follows:

$$correctness(t) = \frac{c(t) - (w_i * e_i(t) + w_c * e_c(t) + we_{ad}(t))}{c(t)}$$

where c(t) is the total number of data points, $w_i$ is a weight for a METRIC_NULLED annotated data point, ei(t) is the total number of METRIC_NULLED annotated data points per time grain, $w_c$ is the weight for WARNING, $e_c(t)$ is the total number of WARNING, and $we_{ad}(t)$ is the weighted total number of annotated data points based on aggregation of annotations on output data per time grain.

In some examples, completeness may be determined using eqn. (2) as follows:

$$dimensional\_completeness(D) = \frac{\Sigma_{d \in D}(p(d))}{|D|}$$

where D is a set of effective dimension values (*e.g.,* active clusters), and p(d) is 1 if a data mart contains metrics for dimension value; otherwise p(d) is 0.

In some examples, freshness may be determined using eqn. (3) as follows:

*Freshness SLI = % of data partitions published with delay < D and completeness > C over the last 90 days, measured independently for each data mart.*

In accordance with an aspect of the disclosed technology, an application programming interface (API) may be used to populate the application stack with the annotations.

In accordance with an aspect of the disclosed technology, a data quality memo pivoter may be provided. The data quality memo pivoter allows a quality annotation of a single data point in business time to be tracked across revisions and determines a representation of changes across the revisions with granularity adjustments for an end user. The data quality memo pivoter may also transform a data quality memo to a data quality annotation compatible with the application stack. More specifically, the pivoter may aggregate and cluster the data quality memos to a desired or, alternatively, predetermined level of granularity that is exposed in the context of the application stack. The pivoter may also implement a versioning mechanism to keep annotations of new versions in synchronization with annotations at the application stack.

In some examples, the system provides, as output, a visualization of the data quality annotations to a user. The visualization includes contextual information and actionable events. The actionable events may, for example, be associated with utilization, allocation, and usage. The visualization may also include a hover card and time chart annotations.

In an additional aspect of the disclosed technology, the data mart includes data quality annotations that may be associated with various combinations of dimension values and the data mart metrics may be produced on specific leaf-level dimensional slices. A back end module may also cluster leaf-level annotations to a parent view slice. Further, when a slice that has multiple data quality metrics from the children-slices is presented to an end user, the back end module may rank the top-most children-slices with the data quality issues and display them to the end user.

Method/Process

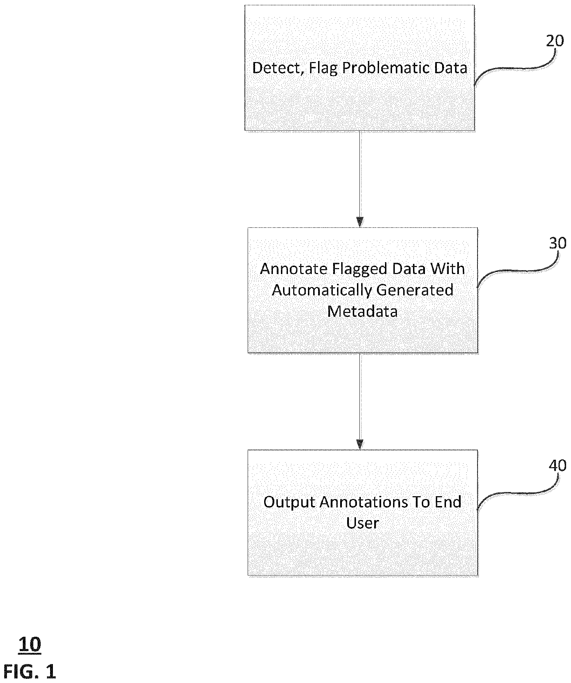

FIG. 1 discloses a process 10 for generating automated, in-context data quality annotations in accordance with one or more aspects of the disclosed technology. The process includes detecting and flagging problematic, or bad, data (block 20). The data may comprise a stream of input data received from an end user system. The data may be flagged because, for example, the data has an unexpected value. As another example, the data value may fall outside a range of permissible values, or be in an incorrect format, or, more generally, be incorrect.

The flagged data is then annotated with automatically generated metadata (block 30). The metadata annotates instances where displayed data dimensions (*e.g.,* which consumer, dates, locations) are incorrect and allows for identification of "bad" data. The annotations or data quality annotations are based on one or more data quality metrics, such as correctness, completeness, and/or freshness. Correctness generally refers to the accuracy of the input data, *e.g.,* whether it is an accurate representation of events. Completeness generally refers to whether all the expected data has been received. Data freshness refers to the staleness of the data, *e.g.,* how new is the data. The data quality annotations may be produced using data cleansers. At block 30, the data quality annotations may also be collected by annotation sweepers. The data quality annotations may also be organized by dimensions (*e.g.,* time, product, datacenter, server, usage, cost, etc.) at block 30. The data quality annotations generated in block 30 are output to an end user (block 40) via, for example, a user interface (UI). The data quality annotations in accordance with an aspect of the disclosed technology provide data quality annotations alongside the data, such that the data quality annotations and metrics are provided in-context.

**System/Data Flow**

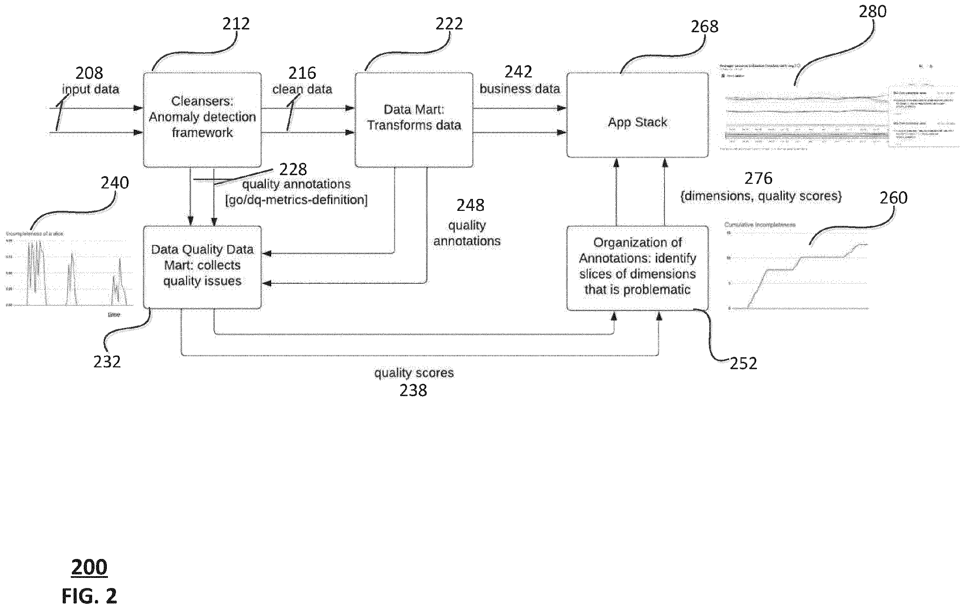

FIG. 2 illustrates a system architecture and data flow 200 in accordance with one or more aspects of the disclosed technology. The system architecture and data flow provide an implementation example for carrying out the process of FIG. 1.

As shown in FIG. 2, one or more input data streams 208 are inputted to one or more data cleansers 212. The input data stream includes, for example, data generated by a customer or end user as part of their business operations. It may include, for example, data relating to the financial, operational, performance, or other aspects of a business. In some examples, the input data stream may comprise end user data relating to performance of a network, datacenter(s), cluster, service, etc. In other examples, it may comprise contact information, addresses, or other information derivable from a database of consumer information. Data cleansers 208 implement an anomaly detection framework for detecting and flagging incorrect, corrupted, incorrectly formatted, or otherwise incomplete data within a dataset.

In general, a process of cleansing is one by which inaccurate, incorrectly formatted, inconsistent, or otherwise anomalous data is organized, corrected, and outputted as clean data. As a result of data cleansing, the data output by cleanser(s) 208 will typically be consistent with other similar datasets in the system. Cleanser(s) 208 may comprise one or more software modules having instructions for implementing a cleansing process and outputting clean data 216 to data mart 222.

Cleanser(s) 208 also outputs data quality annotations 228 to a data quality data mart 232. Data quality annotations 228 are based on the data quality metrics such as correctness, completeness, and freshness.

As mentioned above, correctness may be measured based on invariants, consistency, and variability. Invariants may be defined using two axes: tables and records. Specifically, an intra-table parameter may used to track invariants within one table (*e.g.,* at the output of a stage) and an inter-table parameter may be used to track invariants between tables (*e.g.,* between inputs and outputs of a stage). With regard to records, invariants can be tracked based on whether they are imposed on an individual record or multiple records (*e.g.,* on an aggregated value). As an example, in a Principal Apportioned Data Mart (PADM), apportionment happens for each {service, cluster, timestamp}. As such, the sum of apportionment ratio at each {service, cluster, timestamp} should be 1.0 (intra-table variant) and the sum of all resources inputted should equal the sum of the resources post apportionment at the output (inter-table invariant). Relevant records that fail to meet these invariants should be emitted as errors with, for example, METRIC_NULLED as remediation type.

Consistency refers to relationships with other data marts which provides an additional confidence measure in validating the current correctness metrics and ensuring consistency. Consistency, in essence, comprises validating the correctness metrics against another known source. For example, where the data involved is related to a network or cluster of machines, a PADM's utilization in the aggregate should equal the utilization of the machines. All records that contribute to inconsistent results should be marked and emitted as errors.

Variability, for example, compares current data points to a reasonable range built based on historical data.

As discussed above, the correctness metric, in accordance with an aspect of the disclosure, can be defined as shown above in eqn. (1). As shown above, correctness(t) is a time series. In general, the granularity of the time dimension may be the same as that of the output table. For example, correctness for daily tables such as PADMv3 would have correctness metrics at the daily grain level. As mentioned above, c(t) may comprise the total number of data points in a data mart, *e.g.,* total number of all possible metrics/data points that can be annotated as a function of time. $we_{ad}(t)$ provides a measure of the propagation of input quality, thus contributing to the overall correctness measure of a data mart.

Completeness provides a measure of how much of the expected number of records are present at a given time. The expected number of records may be specified in two ways: (1) important dimensions about the data mart; and/or (2) variability - measured relative to historical cardinality. The number of records may be impacted by changes in select dimensions. For example, such a dimension may include newly onboarded products or cluster turndown where the data is related to a cloud computing environment.

Completeness may be specified as given above in eqn. (2). With reference to eqn. (2), a data mart should define a list of valid sets of dimensions, D, for use calculating the completeness metric. Continuing with the PADMv3 example, all active clusters and principals (*e.g.,* consumers or, more generally, entities that consume resources whose comsumptions are tracked) may be of interest. However, only data relating to a specific set of products may be of interest in the data mart (*i.e.,* PADMv3). In this example, the following dimensions may be calculated as follows: dimensional_completeness (clusters), dimensional_completeness (principals), dimensional_completeness (list of interested products).

With regard to variability, historical cardinality (*e.g.,* a number of historical records) can be used as an indicator of completeness of recent dates or data. This may be modeled as a forecasting problem. For example, completeness may be measured as actual cardinality divided by the lower of a prediction interval of the forecast. For example, completeness variability may be defined as in eqn. (4):

$$completeness\_variability(T, D) = \frac{Cardinality(T, D)}{LowerBound(forecast(T, D))}$$

Freshness may be measured by the pipeline's last time of publication with a sufficiently high completeness. A date shard may be specified that covers a business time interval (t_begin, t end). The date shard may be constrained in that its publication is not permitted before the system times reaches t_end. In general, a sufficiently complete version of each date shard of a table may be published as soon as possible after the system time reaches that shard's t_end. This time, *i.e.,* the sufficiently complete version time, may comprise a time series of latencies that define the freshness metric.

Freshness and completeness may be paired to measure data quality, *e.g.,* how complete is a data set in the latest publication. In this regard, thresholds relating to staleness and robustness may be determined. For example, if the time since last publication exceeds a threshold time t, a customer or end user may be provided with a staleness alert. As another example, if the time since last publication with X% completeness (*e.g.,* X may be any value above 70%) exceeds a threshold time t, a customer may be provided with a data quality alert.

Data quality data mart 232 receives data quality annotations 228 and processes them to generate a quality score 238. Quality store 238 comprises an aggregated data quality score that consolidates a score across three dimensions. A minimum configurable threshold determines whether data is acceptable or not, *e.g.,* data is considered bad if it exceeds the threshold. Data quality data mart 232, in effect, functions to collect quality issues. In other words, data quality data mart 232 comprises a data warehouse focused on data quality metrics generated by the cleansers and data mart 222. For example, data quality data mart 232, based on the data quality metrics, may collect information as to the incompleteness of a slice over time. As shown in graph 240 to the left of data quality data mart 232, the collected quality issues may indicate that incompleteness spiked at specific time windows.

As indicated in FIG. 2, data mart 222 takes as input clean data 216 and outputs business data 242 and quality annotations 248. In generating its outputs, data mart 222 transforms clean data 216. In general, data mart 222 transforms the data for its intended use case. Such transformation may include, for example, filtering, de-duplicating, and validating the data. It may also include performing calculations on the clean data, formatting the data, selecting which columns should be loaded, translating coded values, and other functions normally performed as part of data transformation. Data mart 222 also generates its own data quality annotations 248 using the clean data 216 using the quality metrics previously described.

The data quality scores 238 and quality annotations collected by data quality data mart 232 are organized at module 252 to identify slices of dimensions that are problematic. As shown in the graph 260 to the right of module 252, the quality metrics are processed to determine a cumulative metric. In the example shown, the slice incompleteness shown in the graph 240 is now shown as a cumulative slice incompleteness in graph 260. As shown, the cumulative incompleteness reaches a given quality score due to the first incompleteness event in time in graph 240, and the cumulative incompleteness quality score increases with each incompleteness event in graph 240.

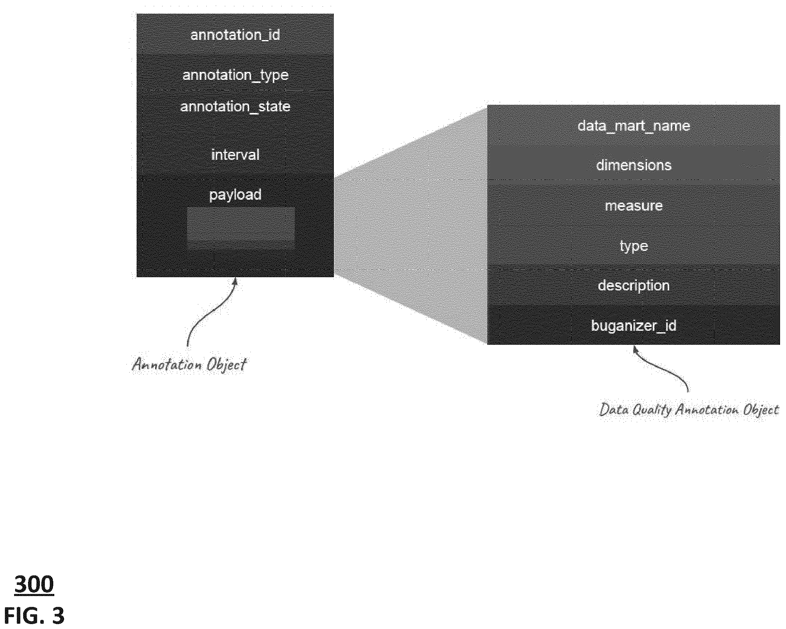

Module 252 supplies application stack 268 with one or more quality scores and one or more quality dimensions 276. Application stack 268 may comprise a data annotation objection for an annotation service provided as part of an application programming interface (API). The application stack may take form of the stack shown in FIG. 3. The API may output the data quality annotations and dimension data as shown in graphic 280 via a UI (*e.g.,* a display).

The data quality annotations 228 from the cleansers typically comprise statistical-based anomalies that are flagged by the cleansers. The data mart specific data quality annotations 248 enable users to determine relationships between the data. Data quality annotations 248 flags more nuanced data quality issues, that a generic cleanser may not flag.

FIG. 3 illustrates examples of annotation objects 300 in accordance with one or more aspects of the disclosure. Annotation objects 300 comprises an example of an annotation service API in accordance with an aspect of the disclosed technology. The annotation service API may be used to populate annotations in an API so that they can be visualized via a UI. Annotation objects 300 includes annotation object 310 and data quality annotation object 320. Objects 310 and 320 are examples of the bundles of data that may be included as part of the annotation service API. Annotation object 310 includes an annotation identifier (annotation_id), an annotation type (annotation_type), an annotation state (annotation_state), an interval, and a payload. The payload comprises data quality annotation object 320. The data quality annotation object includes the data mart name associated with a data quality annotation (data_mart_name), dimensions associated with the data quality annotations (dimensions), measure, type, a description, and a buganizer_id. The buganizer_id comprises an identifier for data quality bugs associated with the annotations.

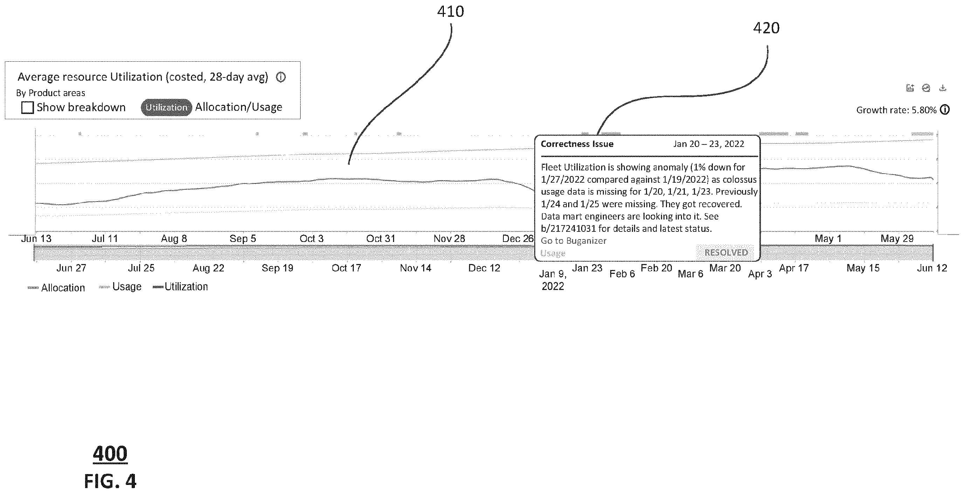

FIG. 4 illustrates an example of a graphic 400 that may be output on UI by the system. In the example, the graphic 400 shows graph 410 illustrating average resource utilization over a period of many months associated with a fleet in a cloud computing system and a hover card 420 including an in-context data quality annotation based on a comprehensibility metric that explains the dip in the usage and allocation in early 2022 as due to missing data.

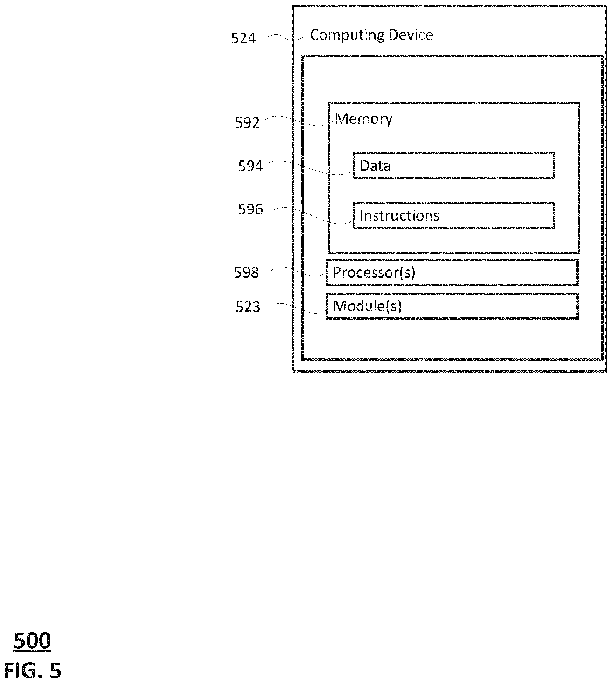

FIG. 5 is a block diagram illustrating an example computing device 500, according to aspects of this disclosure. One or more computing devices 500 may be used to carry out one or more of the functions depicted in FIGS. 1 and 2. For example, computing device 500 may comprise the device that performs the processing done by cleanser(s) 212, data mart 222, data quality data mart 232, module 252, and app stack 268. In effect, each of the functions performed by these elements may comprise a set of instructions that are executed by one or more computing devices 500. The functions may be implemented via one or more software modules 523, for example.

The computing device can take on a variety of configurations, such as, for example, a controller or microcontroller, a processor, or an ASIC. In some instances, computing device 500 may comprise a server or host machine that carries out the operations of FIGS. 1 and 2. In other instances, such operations may be performed by one or more of the computing devices in the data center 270. The computing device may include memory 592, a processing element 598, and memory 592, including data 594 and instructions 596, as well as other components typically present in computing devices (*e.g.,* input/output interfaces for a keyboard, display, etc.; communication ports for connecting to different types of networks).

The memory 592 can store information accessible by the processor 598, including instructions 596 that can be executed by the processor 598. Memory 592 can also include data 594 that can be retrieved, manipulated, or stored by the processing element 598. The memory 592 may be a type of non-transitory computer-readable medium capable of storing information accessible by the processing element 598, such as a hard drive, solid state drive, tape drive, optical storage, memory card, ROM, RAM, DVD, CD-ROM, write-capable, and read-only memories. The processing element 598 can be a well-known processor or other lesser-known types of processors. Alternatively, the processing element 598 can be a dedicated controller such as an ASIC.

The instructions 596 can be a set of instructions executed directly, such as machine code, or indirectly, such as scripts, by the processor 598. In this regard, the terms "instructions," "steps," and "programs" can be used interchangeably herein. The instructions 596 can be stored in object code format for direct processing by the processor 598, or other types of computer language including scripts or collections of independent source code modules that are interpreted on demand or compiled in advance. For example, the instructions 596 may include instructions to carry out the methods and functions discussed above in relation to generating data quality annotations, metrics, etc.

The data 594 can be retrieved, stored, or modified by the processor 598 in accordance with the instructions 596. For instance, although the system and method are not limited by a particular data structure, the data 594 can be stored in computer registers, in a relational database as a table having a plurality of different fields and records, or in XML documents. The data 594 can also be formatted in a computer-readable format such as, but not limited to, binary values, ASCII, or Unicode. Moreover, the data 594 can include information sufficient to identify relevant information, such as numbers, descriptive text, proprietary codes, pointers, references to data stored in other memories, including other network locations, or information that is used by a function to calculate relevant data. Data 594 can include instantaneous RMS voltage; emulated holdup voltage; or any other data that may be necessary for the state timing control system 524 to operate, including any of the modules or components within the state timing control system 524.

FIG. 5 functionally illustrates the processing element 598 and memory 592 as being within the same block, but the processor 598 and memory 592 may instead include multiple processors and memories that may or may not be stored within the same physical housing. For example, some of the instructions 596 and data 594 can be stored on a removable CD-ROM and others within a read-only computer chip. Some or all of the instructions and data can be stored in a location physically remote from, yet still accessible by, the processor 598. Similarly, the processor 598 can include a collection of processors, which may or may not operate in parallel.

In accordance with the foregoing description, one or more aspects of the disclosed technology may comprise one or more combinations of the following features:

F1. A data analytics method, comprising:

cleansing a stream of input data to produce clean data,
generating quality annotations from the clean data, the quality annotations comprising parameters associated with correctness, completeness, and freshness,
collecting the quality annotations,
generating a quality score based on the collected quality annotations, and
identifying problematic data associated with the input data based on the quality score.

F2. The data analytics method of F1, wherein identifying comprises identifying one or more time slices of data associated with a dimension.

F3. The data analytics method of F1 or F2, wherein generating quality annotations comprises generating a correctness metric using eqn. (1).

F4. The data analytics method of any one of F1 through F3, wherein generating quality annotations comprises generating a completeness metric using eqn. (2).

F5. The data analytics method of any one of F1 through F4, wherein generating quality annotations comprises generating a freshness metric using eqn. (3).

F6. The data analytics method of any one of F1 through F5, comprising transforming the clean data into business data.

F7. The data analytics method of any one of F1 through F6, wherein identifying comprises identifying one or more slices of data associated with a dimension and outputting the one or more slices of data and the quality score to a user interface.

F8. The data analytics method of any one of F1 through F7, wherein outputting comprises outputting one or more of the collected quality annotations to the user interface.

F9. A data analytics system, comprising:

a first computing device that cleanses a stream of input data to produce clean data and a first set of quality annotations;
a second computing device that generates a second set of quality annotations from the clean data, the quality annotations comprising parameters associated with correctness, completeness, and freshness; and
a third computing device coupled to the first computing device and second computing device, the third computing device configured to:

collect the first and second set of quality annotations,
generate a quality score based on the collected quality annotations, and
identify problematic data associated with the input data based on the quality score.

F10. The data analytics system of F9, wherein the third computing device identifies problematic data by identifying one or more time slices of data associated with a dimension.

F11. The data analytics system of any one of F9 or F10, wherein the second computing device generates quality annotations by generating a correctness metric using eqn. (1).

F12. The data analytics system of any one of F9 through F11, wherein the second computing device generates quality annotations by generating a completeness metric using eqn. (2).

F13. The data analytics method of any one of F9 through F12, wherein the second computing device generates quality annotations by generating a freshness metric using eqn. (3).

F14. The data analytics method of any one of F9 through F13, wherein the second computing device transforms the clean data into business data.

F15. The data analytics system of any one of F9 through F14, wherein the third computing device identifies problematic data by identifying one or more slices of data associated with a dimension and outputting the one or more slices of data and the quality score to a user interface.

F16. The data analytics system of any one of F9 through F15, wherein outputting comprises outputting one or more of the collected quality annotations to the user interface.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

**Claims**

1. A data analytics method, comprising:

   cleansing a stream of input data to produce clean data,
   generating quality annotations from the clean data, the quality annotations comprising parameters associated with correctness, completeness, and freshness,
   collecting the quality annotations,
   generating a quality score based on the collected quality annotations, and
   identifying problematic data associated with the input data based on the quality score.

2. The data analytics method of claim 1, wherein identifying comprises identifying one or more time slices of data associated with a dimension.

3. The data analytics method of claim 1, wherein generating quality annotations comprises generating a correctness metric using eqn. (1).

4. The data analytics method of claim 1, wherein generating quality annotations comprises generating a completeness metric using eqn. (2).

5. The data analytics method of claim 1, wherein generating quality annotations comprises generating a freshness metric using eqn. (3).

6. The data analytics method of claim 1, comprising transforming the clean data into business data.

7. The data analytics method of claim 6, wherein identifying comprises identifying one or more slices of data associated with a dimension and outputting the one or more slices of data and the quality score to a user interface.

8. The data analytics method of claim 7, wherein outputting comprises outputting one or more of the collected quality annotations to the user interface.

9. A data analytics system, comprising:

   a first computing device that cleanses a stream of input data to produce clean data and a first set of quality annotations;
   a second computing device that generates a second set of quality annotations from the clean data, the quality annotations comprising parameters associated with correctness, completeness, and freshness; and
   a third computing device coupled to the first computing device and second computing device, the third computing device configured to:

   collect the first and second set of quality annotations,
   generate a quality score based on the collected quality annotations, and
   identify problematic data associated with the input data based on the quality score.

10. The data analytics system of claim 9, wherein the third computing device identifies problematic data by identifying one or more time slices of data associated with a dimension.

11. The data analytics system of claim 9, wherein the second computing device generates quality annotations by generating a correctness metric using eqn. (1).

12. The data analytics system of claim 9, wherein the second computing device generates quality annotations by generating a completeness metric using eqn. (2).

13. The data analytics method of claim 9, wherein the second computing device generates quality annotations by generating a freshness metric using eqn. (3).

**14.** The data analytics method of claim 9, wherein the second computing device transforms the clean data into business data.

**15.** The data analytics system of claim 14, wherein the third computing device identifies problematic data by identifying one or more slices of data associated with a dimension and outputting the one or more slices of data and the quality score to a user interface;

wherein, optionally, outputting comprises outputting one or more of the collected quality annotations to the user interface.

Detect, Flag Problematic Data 20

Annotate Flagged Data With Automatically Generated Metadata 30

Output Annotations To End User 40

10
FIG. 1

EP 4 404 075 A1

**200**

**FIG. 2**

EP 4 404 075 A1

annotation_id

annotation_type

annotation_state

interval

payload

*Annotation Object*

data_mart_name

dimensions

measure

type

description

buganizer_id

*Data Quality Annotation Object*

300

FIG. 3

Average resource Utilization (costed, 28-day avg) ⓘ
By Product areas
☐ Show breakdown  (Utilization) Allocation/Usage

410

420

Growth rate: 5.80% ⓘ

**Correctness Issue**          Jan 20 – 23, 2022

Fleet Utilization is showing anomaly (1% down for 1/27/2022 compared against 1/19/2022) as colossus usage data is missing for 1/20, 1/21, 1/23. Previously 1/24 and 1/25 were missing. They got recovered. Data mart engineers are looking into it. See b/217241031 for details and latest status.
Go to Buganizer
Usage                                    RESOLVED

Jun 13    Jul 11    Aug 8    Sep 5    Oct 3    Oct 31    Nov 28    Dec 26              May 1    May 29

Jun 27    Jul 25    Aug 22    Sep 19    Oct 17    Nov 14    Dec 12    Jan 9,  Jan 23  Feb 20  Mar 20  Apr 17    May 15    Jun 12
                                                                    2022        Feb 6      Mar 6    Apr 3

— Allocation  ·· Usage  — Utilization

**400**
**FIG. 4**

EP 4 404 075 A1

Computing Device

Memory

Data

Instructions

Processor(s)

Module(s)

524

592

594

596

598

523

**500**

**FIG. 5**

Europäisches
Patentamt
European
Patent Office
Office européen
des brevets

# EUROPEAN SEARCH REPORT

**Application Number**

EP 23 19 9119

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/202668 A1 (DU YINGZI [US] ET AL) 12 August 2010 (2010-08-12) * abstract; figure 1 * * paragraph [0021] – paragraph [0022] * * paragraph [0033] – paragraph [0035] * | 1-15 | INV. G06F16/215 G06F16/23 G06F16/28 |
| X | JP 2022 176136 A (NAVER CLOUD CORP) 25 November 2022 (2022-11-25) * abstract * * paragraphs [0011], [0017], [0023], [0079], [0088], [0108], [0109] * | 1-15 | |
| X | US 11 308 407 B1 (GUHA SUDIPTO [US] ET AL) 19 April 2022 (2022-04-19) * abstract * * line 47, paragraph 2 – line 62 * * column 6, line 12 – line 24 * | 1-15 | |
| A | US 2021/256257 A1 (TACCARI LEONARDO [IT] ET AL) 19 August 2021 (2021-08-19) * abstract; figure 1e * * paragraph [0008] * * paragraph [0027] – paragraph [0028] * * paragraph [0031] – paragraph [0032] * | 1-15 | TECHNICAL FIELDS SEARCHED (IPC) G06F |

The present search report has been drawn up for all claims

| Place of search | Date of completion of the search | Examiner |
|---|---|---|
| Berlin | 31 January 2024 | Nazzaro, Antonio |

## ANNEX TO THE EUROPEAN SEARCH REPORT
## ON EUROPEAN PATENT APPLICATION NO.

EP 23 19 9119

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2024

| Patent document cited in search report | | Publication date | Patent family member(s) | | Publication date |
|---|---|---|---|---|---|
| US 2010202668 | A1 | 12-08-2010 | US | 2010202668 A1 | 12-08-2010 |
| | | | WO | 2009023828 A1 | 19-02-2009 |
| JP 2022176136 | A | 25-11-2022 | JP | 2022176136 A | 25-11-2022 |
| | | | KR | 20220153914 A | 21-11-2022 |
| | | | KR | 20230057327 A | 28-04-2023 |
| | | | US | 2022368614 A1 | 17-11-2022 |
| US 11308407 | B1 | 19-04-2022 | NONE | | |
| US 2021256257 | A1 | 19-08-2021 | US | 2021256257 A1 | 19-08-2021 |
| | | | US | 2022245935 A1 | 04-08-2022 |

EPO FORM P0459

For more details about this annex : see Official Journal of the European Patent Office, No. 12/82